# EUROPEAN PATENT APPLICATION

(11) **EP 0 627 719 A2**
(43) Date of publication of application: **07.12.1994**
(21) Application number: 94830142.9
(22) Date of filing: 25.03.1994
(51) Int. Cl.: G08G 1/16, B60Q 1/52

(54) **A vehicle-mounted device for identifying and signalling the presence of danger and/or hazards ahead to a driver, and/or for communicating the presence of such to other vehicles**

(30) Priority: 31.03.1993 IT BZ930012
(71) Applicant: Martinello, Settimo, I-39057 S.Michele Appiano (BZ) (IT)
(72) Inventor: Martinello, Settimo, I-39057 S.Michele Appiano (BZ) (IT)
(74) Representative: Righetti, Giuseppe

(57) **Abstract**

The invention relates to a vehicle-mounted device for identifying and signalling the presence of danger and/or hazardous situations, as well as for passing on such a signal to other vehicles.lt comprises a first component (1) to register the presence of a change in speed or direction of a vehicle which is greater than a threshold discrimination value, whereupon an electrical circuit (5) is broken ; a second component (2), which emits a first electromagnetic wave when the device is functioning normally, and a second electromagnetic wave when the electrical circuit (5) is broken, and a third electromagnetic wave when it is so commanded by a manual switch ; and a third component (3) which on receiving and recognising the first electromagnetic wave activates a normal function signal, on receiving the second wave emits a danger signal, and on receiving the third wave emits a hazard signal.

## Description

The invention relates to a vehicle-mounted device for identifying and signalling the presence of danger and/or hazardous situations, as well as for passing on such a signal to other vehicles.

The device belongs to the field of safety devices for motor vehicles, all aimed at improving road safety conditions, and especially to the field of aids which extend the limits of normal human perception, so that potentially dangerous situations can be identified as soon as possible while driving, obviously with the aim of allowing a driver to take suitable action.

The prior art teaches devices of the above type, in particular two devices. In the first of these, a device placed in the front of the vehicle sends out continuous radar signals. The echo signals received back from objects ahead of the vehicle are analysed in terms of speed, and if this should suddenly drop below a predetermined threshold speed, an alarm signal is set off.

The principal disadvantage of this device is that its field of action is limited to a zone straight in front of the vehicle. When the vehicle turns round a bend, a delicate moment indeed, when a driver is less well sighted than on a straight, the device is not only unable to sense the presence of an obstacle, but is liable to give false readings, as it reports objects situated on the other side of the road (or even off the road completely) and not at all in the trajectory of the vehicle.

A further disadvantage of the device consists in the fact that the radar cone of action is not sufficiently narrow to eliminate false readings even when travelling along a straight road, due to the presence in the gutter or on the roadside of casual objects of no importance to the real road situation.

The second device comprises an electronic signaller, arranged fixed on the ground near a road black spot.

The electronic signaller emits a radiation of electromagnetic waves. The radiation is continuous and is received by a corresponding receiver arranged on board a vehicle, which activates an alarm signal when it receives said signal.

The principal disadvantage of the above device is that the electronic signaller needs a continuous power supply, and of course an electronic signaller is needed for every accident black spot on the road. Needless to say, this is extremely expensive as well as inefficient, since the signal must be emitted even when there is no vehicle approaching.

A further drawback consists in the fact that spontaneously-developed situations of danger cannot be signalled.

A still further drawback of both the above- described devices is that it is not possible for one vehicle to communicate to another a perceived potentially dangerous situation, even when such a situation can clearly be seen by the driver him or herself, or when the cause of the danger is a driver or his or her vehicle.

An essential aim of the present invention is to obviate the above-mentioned drawbacks by providing a device for a vehicle, to identify and signal the presence of dangerous situations and/or to communicate such danger to other vehicles. The device is also capable of sensing such dangerous situations before a human being could, and is incapable of erring independently of any variation in conditions, and at any moment in a vehicle trajectory.

A further important aim of the invention is to provide a device for a vehicle which is able to identify and signal a potentially dangerous situation and/or communicate the situation of alert to other vehicles. With the invention, the driver of a vehicle can communicate to other drivers that there is in fact a potentially dangerous situation in the environs, which he has seen or has indeed been the cause of.

A further important aim of the present invention is to provide an onboard device for identifying and signalling the presence of dangerous situations and/or alert situations, where the device emits its alarm signal to other approaching vehicles without the need for intervention on the part of the driver of a vehicle which has caused the dangerous situation.

These and other aims besides are all attained by the device for a vehicle, for identifying and signalling the presence of dangerous situations and/or to communicate such presence of danger to other vehicles, the principal characteristics of which will better emerge from the claims that follow.

Further characteristics and advantages of the present invention will better emerge from the detailed description that follows, of an embodiment of the invention, illustrated in the form of a non-limiting example in the accompanying drawings, in which:
- figure 1 schematically shows a device of the invention, with its three main components;
- figure 2 schematically shows one component of a second device according to the invention.

With reference to the figures, 4 denotes a first device according to the invention, arranged on board a vehicle and comprising a first component 1, a second component 2 and a third component 3. Figure 2 shows only the third component 3', identical to third component 3 of the first figure, arranged on board a second vehicle. The rest of the components are indicated in both figures by the same numbers.

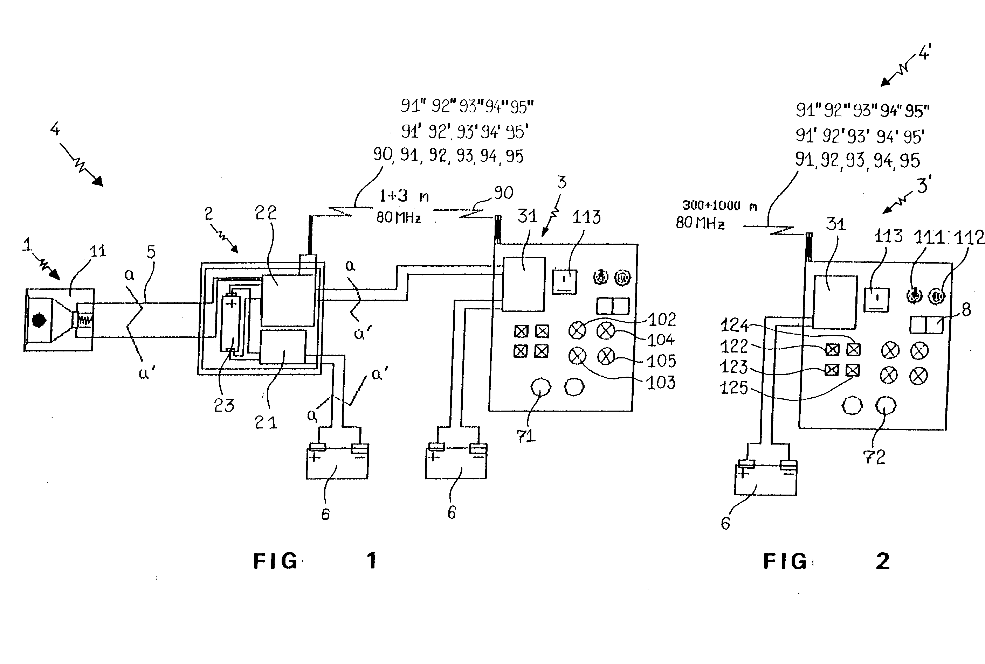

With reference to figure 1, while the device 4 is functioning, an inertial sensor 11 senses the presence of a change in the vehicle speed which is of a greater entity than and/or in a different direction than predetermined threshold values. In such a case, the sensor 11 breaks a continuously-supplied electrical circuit 5. A vehicle involved in an accident would exceed the above-mentioned threshold values, as would a vehicle braking very sharply.

When the electrical circuit 5 is broken, obviously it cannot function. This is read by an electronic emission card 22 on the second component 2, connected with the electrical circuit 5, which emission card 22 then emits an electromagnetic wave 91 for all of the time in which the circuit remains broken. The electromagnetic wave 91 is supplied by an emergency battery supply 23, and is automatic and can also be set off by a shearing of the cables following an accident (see section a-a' of figure 1). The electromagnetic wave 91 can be picked up (see figure 2) by the third component 3' of the second device 4', which can be at a distance from the first device of between 300 metres and 1000 metres. This, therefore, is the way in which an accident ahead is communicated to an approaching vehicle.

The emergency supply battery 23 is charged by a battery 6, which can be the normal vehicle battery, through an electronic suply card 21 specially designed for the task.

The emission card 22 of the second component 2 can also emit electronic waves denoted 92, 93, 94 and 95 on command of a manual switch 102, 103, 104, 105. The electromagnetic wave 92, 93, 94 and 95 can be picked up, as indicated in figure 2, by the third component 3' of a second device 4' which is at a distance from device 4 comprised between 300m and 1000m.

The manual activation is necessary when, for example, other vehicles must be informed of the presence of hazard situations identified by the driver of a vehicle, such as roadworks, abnormal loads, traffic holdups and so on. The manual activation further permits the device to be used as a continuous signaller of a permanent but not necessarily fixed alert.

The electromagnetic wave 91 is modulated and constituted by two parts: a first part 91' is the same for all devices and a second part 91" is different for each device. The electromagnetic waves 92, 93, 94 and 95 are modulated and respectively constituted by a first part 92', 93', 94', 95', respectively different from the others but identical for all of the devices and respectively a second part 92", 93", 94", and 95", which can be only one of two different configurations.

The electromagnetic wave 91, 92, 93, 94, 95 frequency is comprised between 60 and 81 MHz, and is advantageously 80MHz.

With reference to figure 2, an electronic receiving card 31 receiving the third component 3' of a second device 4', picks up and recognises the first part 91' of the electromagnetic wave 91 and emits a danger signal 111. It can also recognise the uniqueness of the first part 91' and the diversity of the second part 91" of a plurality of electromagnetic waves 91, and activate a danger signal 112 and/or a counter 8.

The danger signal 111, since activated in the presence of a single electromagnetic wave 91, signals when one vehicle has been involved in an accident, whereas danger signal 112 indicates the presence of a plurality of vehicles involved in an accident, and the counter 8 gives the number.

The receiving electronic card 31 of the third component 3' of the second device 4' also picks up and recognises the first part 92', 93', 94', 95' and the second part 92", 93", 94", 95" of the electromagnetic wave 92, 93, 94, 95, and activates the appropriate warning signal 122, 123, 124, 125. Afurther possibility of the invention is that the receiving electronic card 31 of the third component 3' picks up and recognises the first part 92', 93', 94' and 95' and the second part 92", 93", 94", 95" of the electromagnetic wave 92, 93, 94, 95 and activates or not a warning signal 122, 123, 124, 125, according to the configuration (out of the two configurations possible) of the second part 92", 93", 94", 95"; that is, on the basis of whether or not it is identical to that of electromagnetic wave 92, 93, 94, 95 which the emitting card 22 associated to the same device 4' would emit.

The fact that the second part 92", 93", 94", 95" of the electromagnetic wave 92, 93, 94, 95 can have only two possible configurations means that the warning signals 122, 123, 124, 125 emitted by the onboard devices in vehicles in different carriageways of motorways can clearly be distinguished. This can be done by providing each motorway entrance toll booth with a signaller to indicate to the electronic card 31 of the vehicles entering which of the two configurations the second part 92", 93", 94", 95" of the electromagnetic waves 92, 93, 94, 95 will assume, depending on the carriageway that will be used by the vehicle.

In this way the warning signals 122,123,124,125 are not activated by vehicles travelling in a different carriageway.

Thus it will be possible to associate one of the alert situations to each signal 122, 123, 124, 125, such as for example roadworks, abnormal vehicle and so on, without sending a useless hazard warning to a vehicle travelling in a different carriageway.

Each exit tollbooth on a motorway will be provided with a signaller which by means of an electromagnetic wave sent to the receiving card 31 of the device 4' will reset the situation wherein the device 4' will signal reception of an electromagnetic wave 92, 93, 94 and 95 with either of the two possible configurations of the second part 92", 93", 94", 95" of the electromagnetic waves 92, 93, 94, 95.

With reference to figure 1, a manual switch 71 can be used to swith off the emission of the electromagnetic wave 92, 93, 94 and 95 while the device is functioning and leaving it so.

With reference to figure 2, a manual switch 72 can be used to stop reception of the electromagnetic wave 91, 92, 93, 94, while leaving the device 4' functioning.

In this way a communication or signal not considered important can be switched off.

Finally, as shown in figure 1, the electronic card 22 is further electrically connected to the electronic card 31, which latter therefore activates a normal function signal 113 while the device 4 is functioning.

In a version of the invention, as can be seen in figure 1, the electronic card 22 emits an electromagnetic wave 90 while the device 4 is functioning, which is picked up and recognised by the electronic card 31 of the same device 4, which then activates a normal functionn signal 113.

The device of the invention is housed on board the vehicle, with the inertial sensor 11 near the front fender, the supply card 21, the emission card 22, the emergency battery 23 all in the motor compartment and the receiver card 31, manual switches 71, 72, 102, 103, 104, 105, danger signals 111, 112, normal function signal 113, warning signals 122, 123, 124, 125 and counter 8 on the dashboard.

The present invention attains the set aims. Obviously in it prractical realisation it can assume various forms and configurations from those described herein, without foresaking the field of protection sought.

Furthermore, all of the details can be substituted by other technically equivalent ones, and the forms, the dimensions and the materials can be of any kind according to need.

## Claims

1. An onboard device for identifying and signalling the presence of danger and/or hazardous traffic situations and/or for communicating the presence of such situations to othervehicles provided with like devices, comprising:
- a first group of elements, mechanical or electrical, or partly mechanical and partly electrical elements, united and interdependent, forming a first component (1) able to sense a change in speed and/or direction of the vehicle, of a greater entity than and/or in a different direction to a predetermined thershold speed and/or direction change value, and which on reading such a change breaks a permanently supplied electrical circuit (5);
- a second group of elements, electrical or electronic, or partly electrical and partly electronic, united and interdependent, forming a second component (2), which emits a first electromagnetic wave (90) while the device (4,4') is functioning, which emits a second electromagnetic wave (91) should said electrical circuit (5) be broken and which emits a third electromagnetic wave (92, 93, 94, 95) should it be so commanded by a manual switch (102,103,104, 105);
- a third group of elements, electrical or electronic, or partly electrical and partly electronic, united and interdependent, forming a third component (3, 3'), which picks up and recognises the first electromagnetic wave (90) and on so doing activates a normal function signal (113) of the device (4, 4'); said third component also picking up and recognising the second electromagnetic wave (91) and on so doing activating one of two danger signals (111, 112); said third component also picking up and recognising the third electromagnetic wave (92, 93, 94, 95) and on so doing activating at least one hazard signal (122, 123, 124, 125); said normal function signal, said danger signal and said at least one hazard signal being of a visual and/or sound and/or olfactory type.

2. A device as in claim 1, characterised in that the second electromagnetic wave (91) is modulated and comprises a first part (91') which is identical for all of the devices (4, 4') and a second part (91") which is different from one device (4) to another.

3. A device as in claim 1, characterised in that the third electromagnetic wave (92, 93, 94, 95) is modulated and comprises a first part composed of a plurality of wave frequencies (92', 93', 94', 95'), identical for all of the devices (4, 4') and a second part (92", 93", 94", 95") which can assume either one of two possible configurations.

4. A device as in claim 1, characterised in that a frequency of the electromagnetic waves (90, 91, 92, 93, 94, 95) is comprised between 60 and 81 MHz, and is preferably 80MHz.

5. A device as in claim 1, characterised in that the second component (2) can connect electrically with the third component (3), causing said third component (3) to activate the normal function signal (113).

6. A device as in claim 1, characterised in that the third component (3, 3') comprises a manual switch (71) for switching off said at least one hazard signal (122,123,124,125), while the second component (2) is emitting said second (91) and/or third electromagnetic wave (92, 93, 94, 95), and comprises a manual switch (72) by which reception of the second and/or third electromagnetic wave (92, 93, 94, 95) can be switched off while the device (4') is left functioning and while the third component (3') is receiving a signal.

7. A device as in claim 1, characterised in that the first component (1) comprises at least one inertial sensor (11).

8. A device as in claim 1, characterised in that the second component (2) comprises at least one electronic supply card (21), at least one electronic emission card (22) and at least one emergency supply battery (23).

9. A device as in claim 1, characterised in that the third component (3, 3') comprises at least one receiving electronic card (31), said manual switches (102, 103, 104, 105), said normal function signal (113) said two danger signals (111, 112), said at least one hazard signal (122, 123, 124, 125) and at least one counter (8).

10. A device as in claim 8, characterised in that the at least one electronic supply card (21) continuously supplies the at least one emergency supply battery (23) with energy from a battery (6).

11. A device as in claim 8, characterised in that the at least one emergency supply battery (23) continuously supplies the at least one electronic emission card (22) while the electrical circuit (5) is broken.

12. A device as in claim 8, characterised in that the electrical circuit (5) is connected to the at least one electronic emission card (22).

13. A device as in claim 8, characterised in that during a period in which the electric circuit (5) is broken the at least one electric emission card (22) emits the second electromagnetic wave (91).

14. A device as in claim 8, characterised in that the at least one electronic emission card (22) can be commanded by means of the manual switch (102, 103, 104, 105) to emit the third electromagnetic wave (92, 93, 94, 95).

15. A device as in claim 8, characterised in that an emission of the second and/or third electromagnetic wave (92, 93, 94, 95) by the at least one electronic emission card (22) can be switched off by a manual switch (71), leaving the device still functioning.

16. A device as in claim 8, characterised in that a reception of the second (91) and/or the third electromagnetic wave (92, 93, 94, 95) by the at least one receiving electronic card (31) of the device (4') can be interrupted by means of a manual switch (72), leaving the device (4') still functioning.

17. A device as in claim 9, characterised in that the at least one receiving electronic card (31) of the third component (3') picks up and recognises the first part (91') of the second electromagnetic wave (91) and activates a first of the two danger signals (111).

18. A device as in claim 9, characterised in that the at least one receiving electronic card (31) of the third component (3') picks up and recognises a sameness of the first part (91') and a diversity of the second part (91") of a plurality of second electromagnetic waves (91), and activates the second of the two danger signals (112) and/or the at least one counter (8).

19. A device as in claim 9, characterised in that the at least one receiving electronic card (31) of the third component (3') picks up and recognises the first part (92', 93', 94', 95') of the third electromagnetic wave (92, 93, 94, 95) and activates the at least one hazard signal (122, 123, 124, 125).

20. A device as in claim 9, characterised in that the at least one receiving electronic card (31) of the said component (3') picks up and recognises the first part (92', 93', 94', 95') and the second part (92", 93", 94", 95") of the third electromagnetic wave (92, 93, 94, 95) and activates or not a hazard signal (122, 123, 124, 125), according to a command triggered by a resulting configuration composed of said first part (92', 93', 94', 95') and said second part (92", 93", 94", 95") picked up; said configuration depending on one of two possible configurations of the second part (92", 93", 94", 95"), the first part being equal for all devices (4'); one of said two configurations being equal to an electromagnetic wave (92, 93, 94, 95) which the at least one electronic emission card (22) provided in the device (4') equipped with the at least one receiving electronic card (31) emits when activated.

21. A device as in claims from 1 to 20, characterised in that it is housed on board the vehicle, in particular the first component (1) near the front part of the vehicle close to the fender, the second com- ponenet (2) in the motor compartment and the third component (3, 3') on the dashboard.
